# EUROPÄISCHE PATENTSCHRIFT

(11) **EP 4 347 288 B1**
(45) Veröffentlichungstag und Bekanntmachung des Hinweises auf die Patenterteilung: **09.04.2025**
(21) Anmeldenummer: 22707122.2
(22) Anmeldetag: 22.02.2022
(51) Int. Cl.: B60H 3/00, B60H 1/00

(54) **KLIMATISIERUNGSSYSTEM MIT ELEKTROFILTER, KRAFTFAHRZEUG UND VERFAHREN ZUM BETREIBEN EINES SOLCHEN KLIMATISIERUNGSSYSTEMS**
AIR-CONDITIONING SYSTEM WITH ELECTROSTATIC FILTER, MOTOR VEHICLE AND METHOD FOR OPERATING SUCH AN AIR-CONDITIONING SYSTEM
SYSTÈME DE CLIMATISATION À FILTRE ÉLECTROSTATIQUE, VÉHICULE AUTOMOBILE ET PROCÉDÉ D'ACTIONNEMENT DUDIT SYSTÈME DE CLIMATISATION

(30) Priorität: 31.05.2021 DE 102021114015
(43) Veröffentlichungstag der Anmeldung: 10.04.2024
(73) Patentinhaber: AUDI AG, 85057 Ingolstadt (DE)
(72) Erfinder: BELZ, Karsten, 85051 Ingolstadt (DE)
(86) Internationale Anmeldenummer: PCT/EP2022/054328
(87) Internationale Veröffentlichungsnummer: WO 2022/253471

(56) Entgegenhaltungen:
- DE-A1- 102020 007 008
- JP-A- H09 318 235
- JP-A- S5 653 911
- US-A1- 2018 319 256

## Beschreibung

Die Erfindung betrifft ein Klimatisierungssystem gemäß Anspruch 1 für ein Kraftfahrzeug mit einer Klimatisierungseinheit, die dazu eingerichtet ist, Innenraumzuluft zu konditionieren; wenigstens einem der Klimatisierungseinheit zugeordneten Luftfilter; einer Gebläseeinrichtung, die dazu eingerichtet ist, einen Luftstrom zu erzeugen, der zu der Klimatisierungseinheit geleitet wird; wenigstens einem mit der Gebläseeinrichtung verbundenen Luftzufuhrkanal; wenigstens einem in dem Luftzufuhrkanal stromaufwärts von der Gebläseeinrichtung angeordneten Elektrofilter; und mit einer Steuereinrichtung, die mit dem Elektrofilter verbunden ist. Ferner betrifft die Erfindung ein Kraftfahrzeug mit einem solchen Klimatisierungssystem und ein Verfahren zum Betreiben eines solchen Klimatisierungssystems. Ein derartiges Klimatisierungssystem ist aus der US 2018/319256 A1 bekannt.

Aus der DE 10 2016 115 441 A1 ist ein elektromechanisches Filtersystem für ein Klimagerät bekannt, bei dem eine Hochspannungsversorgung unterbrochen wird, wenn das Klimagerät geöffnet wird.

Die DE 10 2011 007 351 A1 zeigt eine Luftreinigungsvorrichtung für ein Kraftfahrzeug, die dann ausgeschaltet wird, wenn eine Türe des Kraftfahrzeugs geöffnet wird und ungefilterte Luft eintritt.

Ein weiteres System zur Luftreinigung eines Fahrzeugs mit Elektrofilter ist aus der US 2018 037 093 A1 bekannt.

Ferner wird noch auf die DE 10 2020 007 008 A1, JP S56 53911 A und JP H09 318235 A hingewiesen.

Bei Kraftfahrzeugen werden im Klimatisierungssystem bzw. einer Klimatisierungseinheit, die auch als Klimagerät bezeichnet werden kann, üblicherweise Filteranordnungen bzw. Kombifilter als Luftfilter eingesetzt, wie beispielsweise Pollenfilter, Aktivkohlefilter bzw. -schicht, Antiallergenfilter bzw. - schicht.

Zusätzlich können für eine verbesserte Filterleistung auch Elektrofilter eingesetzt werden. Derartige Elektrofilter werden mit einer Hochspannung, beispielweise bis zu 20 kV, betrieben. Die Elektrofilter können beispielsweise in einem Wasserkasten bzw. einem Luftansaugtrakt des Klimatisierungssystems angeordnet werden.

Die der Erfindung zu Grunde liegende Aufgabe wird darin gesehen, den Einsatz von Elektrofiltern in Kraftfahrzeugen zu verbessern.

Diese Aufgabe wird gelöst durch ein Klimatisierungssystem, ein Kraftfahrzeug und eine Verfahren mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also ein Klimatisierungssystem für ein Kraftfahrzeug mit einer Klimatisierungseinheit, die dazu eingerichtet ist, Innenraumzuluft zu konditionieren;
wenigstens einem der Klimatisierungseinheit zugeordneten Luftfilter;
einer Gebläseeinrichtung, die dazu eingerichtet ist, einen Luftstrom zu erzeugen, der zu der Klimatisierungseinheit geleitet wird;
wenigstens einem mit der Gebläseeinrichtung verbundenen Luftzufuhrkanal; wenigstens einem in dem Luftzufuhrkanal stromaufwärts von der Gebläseeinrichtung angeordneten Elektrofilter; und
einer Steuereinrichtung, die mit dem Elektrofilter verbunden ist, wobei die Steuereinrichtung dazu eingerichtet ist, den Betrieb des Elektrofilters in Abhängigkeit von wenigstens einem erfassten Klimatisierungsparameter oder/und von wenigstens einem Fahrzeugzustandsparameter zu steuern. Dabei ist vorgesehen, dass der Fahrzeugzustandsparameter der geöffnete und geschlossene Zustand einer Motorhaube des Kraftfahrzeugs ist.

Hierdurch wird ein verbesserter Einsatz von einem Elektrofilter in einem Kraftfahrzeug ermöglicht, wobei der Elektrofilter für jeweilige Bedingungen im Fahrzeugbetrieb optimiert eingestellt werden kann.

Das Klimatisierungssystem kann als Luftzufuhrkanäle einen Frischluftkanal und einen Umluftkanal aufweisen. Dabei kann in dem Frischluftkanal und in dem Umluftkanal ein jeweiliger Elektrofilter angeordnet sein. Hierdurch wird sichergestellt, dass Schadstoffe, die über beide Lufteintritte in das Kraftfahrzeug gelangen, nur gefiltert in den Innenraum des Kraftfahrzeugs abgegeben werden.

Bei dem Klimatisierungssystem kann die Steuereinrichtung dazu eingerichtet sein, einen betreffenden Elektrofilter in Abhängigkeit von einem eingestellten Klimatisierungsbetrieb, insbesondere Frischluftbetrieb oder Umluftbetrieb oder Mischbetrieb, zu aktivieren. Hierdurch kann insbesondere auch der Energieverbrauch der Elektrofilter optimiert werden, was sich beispielsweise auch günstig auf eine Reichweite eines zumindest teilweise elektrisch angetriebenen Kraftfahrzeugs auswirken kann.

Zusätzlich kann die Steuereinrichtung dazu eingerichtet sein, im Mischbetrieb die beiden Elektrofilter gleichzeitig oder intermittierend nacheinander zu aktivieren.

Bei dem Klimatisierungssystem kann die Steuereinrichtung dazu eingerichtet sein, den Elektrofilter in Abhängigkeit von einem Temperaturwert, insbesondere Innenraumtemperatur oder/und Außentemperatur, oder/und von einem Luftfeuchtigkeitswert einzustellen. Solche Werte werden in diesem Zusammenhang als Klimatisierungsparameter verstanden. Hierdurch kann berücksichtigt werden, unter welchen Umgebungsbedingen der bzw. die Elektrofilter betrieben werden, so dass beispielsweise unter sehr feuchten Bedingungen eine geringere Spannung an dem Elektrofilter angelegt wird.

Wie oben erwähnt, ist bei dem Klimatisierungssystem der Fahrzeugzustandsparameter der geöffnete und geschlossene Zustand einer Motorhaube des Kraftfahrzeugs. Dabei kann die Steuereinrichtung dazu eingerichtet sein, den Elektrofilter im geöffneten Zustand der Motorhaube in einem limitierten Betrieb zu betreiben oder auszuschalten. Hierdurch wird die Sicherheit für eine Bedienperson erhöht, die im geöffneten Motorraum eine Handlung ausführen muss, wie beispielsweise Ölstand kontrollieren, Wischwasser nachfüllen, Ladekabel herausholen und dergleichen.

Die Steuereinrichtung kann auch dazu eingerichtet sein, den Betrieb des Elektrofilters ausgehend von einem Vollbetrieb kontinuierlich über eine bestimmte Zeitdauer zu reduzieren und in dem limitierten Betrieb einzustellen oder auszuschalten. Beispielsweise kann eine anfängliche sehr hohe Spannung, die als 100% festgelegt wird, über eine bestimmte Zeitdauer reduziert werden, beispielsweise auf einen limitierten bzw. ausgeschalteten Wert von 0% bis 20%. Man kann in diesem Zusammenhang auch davon sprechen, dass der Elektrofilter mit einer Art Rampe bzw. Abklingkurve heruntergefahren wird.

Ferner kann die Steuereinrichtung dazu eingerichtet sein, den limitierten Betrieb oder das Ausschalten des Elektrofilters in Abhängigkeit von einem Luftfeuchtigkeitswert einzustellen. Wird beispielsweise eine sehr hohe relative Luftfeuchtigkeit erfasst, kann die am Elektrofilter angelegte Spannung stärker reduziert oder sogar weggenommen werden, um in feuchter Umgebung die Sicherheit für eine Bedienperson zu gewährleisten.

In diesem Zusammenhang kann auch daran gedacht werden, dass die Steuereinrichtung dazu eingerichtet ist, nach Betätigung einer Entriegelungsvorrichtung für die Motorhaube, beispielsweise einem Entriegelungshebel im Fahrzeuginnenraum, eine Verriegelung der Motorhaube erst dann aufzuheben, wenn die Spannung am Elektrofilter auf einem gewünschten Wert reduziert worden ist.

Ein Kraftfahrzeug kann mit einem oben beschriebenen Klimatisierungssystem ausgerüstet sein. Dabei kann das Kraftfahrzeug verbrennungsmotorisch oder zumindest teilweise elektrisch angetrieben sein. In dem Motorraum, der von einer Motorhaube abgedeckt ist, kann also ein Verbrennungsmotor oder/und ein Elektromotor des Kraftfahrzeugs untergebracht sein.

Die Steuereinrichtung des Klimatisierungssystems kann Teil einer übergeordneten Fahrzeugsteuereinrichtung sein. Ferner kann in dem Kraftfahrzeug eine Anzeige vorhanden sein, die dazu eingerichtet ist, den aktiven oder inaktiven Betriebszustand eines Elektrofilters anzugeben.

Ein Verfahren zum Betreiben eines oben beschriebenen Klimatisierungssystems umfasst folgende Schritte:
Feststellen des Zustands einer Motorhaube des Kraftfahrzeugs;
Aktivieren des Betriebs des Elektrofilters, wenn die Motorhaube geschlossen ist;
Limitieren oder Deaktivieren des Betriebs des Elektrofilters, wenn die Motorhaube geöffnet ist, wobei vor dem Limitieren oder Deaktivieren ein aktueller Betriebsstatus des Elektrofilters erfasst wird.

Bei dem Verfahren kann ein Luftfeuchtigkeitswert erfasst werden, wobei das Limitieren oder Deaktivieren des Elektrofilters in Abhängigkeit von dem Luftfeuchtigkeitswert erfolgt.

Ferner kann bei dem Verfahren der Elektrofilter deaktiviert werden, wenn der Luftfeuchtigkeitswert einen Feuchtigkeitsschwellwert überschreitet. Wird als Luftfeuchtigkeitswert beispielsweise die relative Luftfeuchtigkeit bestimmt, kann der Feuchtigkeitsschwellwert beispielsweise zwischen 60% bis 80% festgelegt werden. Denkbar ist auch eine Anpassung dieses Feuchtigkeitsschwellwert in Abhängigkeit von der Position des Kraftfahrzeugs und der damit verbundenen Klimazone oder der Nähe zu einem Meer oder dergleichen.

Weitere Vorteile der Erfindung ergeben sich aus der nachfolgenden Beschreibung von Ausführungsformen unter Bezugnahme auf die Figuren. Dabei zeigt:
- Fig. 1: eine vereinfachte und schematische Darstellung eines Klimatisierungssystems;
- Fig. 2: eine vereinfachte und schematische Darstellung eines Kraftfahrzeugs mit einem Klimatisierungssystem;
- Fig. 3: ein vereinfachtes und schematisches Ablaufdiagramm eines Verfahrens zum Betreiben der Klimatisierungssystems.

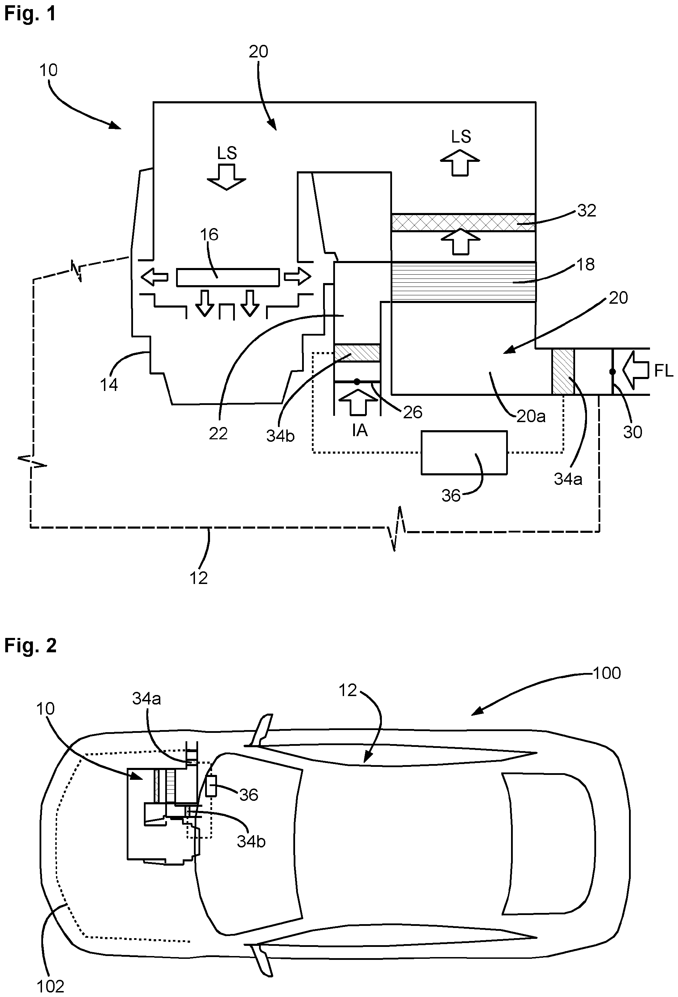

In Fig. 1 ist schematisch und vereinfacht ein Klimatisierungssystem 10 für ein verbrennungsmotorisch oder zumindest teilweise elektrisch angetriebenes Kraftfahrzeug dargestellt. Die Darstellung zeigt eine Art Draufsicht von oben auf das Klimatisierungssystem 10. Von dem Kraftfahrzeug ist mit gestrichelter Linie ein Innenraum 12 bzw. Fahrgastraum angedeutet. Das Klimatisierungssystem 10 umfasst eine Klimatisierungseinheit 14, die auch als Klimagerät oder Klimamodul bezeichnet werden kann. Als beispielhafte Komponente der Klimatisierungseinheit 14 ist ein Verdampfer 16 gezeigt. Der Verdampfer 16 ist in einem hier nicht weiter dargestellten Kältemittelkreislauf angeordnet.

Das Klimatisierungssystem 10 umfasst ferner wenigstens eine Gebläseeinrichtung 18, die in der Fig. 1 lediglich als horizontal schraffierter Block vereinfacht dargestellt ist. Die Gebläseeinrichtung 18 ist dazu eingerichtet ist, einen Luftstrom LS zu erzeugen, der zu dem Verdampfer 16 bzw. der Klimatisierungseinheit 14 geleitet wird. Die Gebläseeinrichtung 18 ist dabei bezogen auf den erzeugten Luftstrom LS stromaufwärts von dem Verdampfer 16 bzw. dem Klimagerät 14 angeordnet.

Das Klimatisierungssystem 10 umfasst weiter einen mit der Gebläseeinrichtung 18 verbundenen Luftzufuhrkanal 20. Stromaufwärts von der Gebläseeinrichtung 18 ist ein Frischluftkanalabschnitt 20a angeordnet, der mit dem Luftzufuhrkanal 20 verbunden ist bzw. einen Teil des Luftzufuhrkanals 20 bildet.

Das Klimatisierungssystem 10 umfasst weiter einen mit dem Luftzufuhrkanal 20 stromaufwärts von der Gebläseeinrichtung 18 verbundenen Innenraumabluftkanalabschitt 22.

Dem Innenraumabluftkanalabschnitt 22 ist eine Abluftklappeneinrichtung 26 zugeordnet, die dazu eingerichtet ist, den Innenraumabluftstrom IA zumindest teilweise der Gebläseeinrichtung 18 zuzuführen.

Dem Frischluftkanalabschnitt 20a ist eine Frischluftklappeneinrichtung 30 zugeordnet ist, die dazu eingerichtet ist, den Frischluftstrom FL zumindest teilweise der Gebläseeinrichtung 18 zuzuführen.

Je nach Stellung der Abluftklappeneinrichtung 26 bzw. der Frischluftklappeneinrichtung 30 kann das Klimatisierungssystem 10 in einem reinen Frischluftbetrieb, einen reinen Umluftbetrieb oder einem Mischbetrieb betrieben werden.

Stromabwärts von der Gebläseeinrichtung 18 kann wenigstens ein Luftfilter 32, beispielsweise Pollenfilter, Aktivkohlefilter oder dergleichen, angeordnet sein, so dass von der Gebläseeinrichtung 18 geförderte Luft gefiltert bzw. gereinigt zum Klimagerät 14 bzw. zum Verdampfer 16 gelangt.

Stromaufwärts von der Gebläseeinrichtung 18 kann in dem Luftzufuhrkanal 20 wenigstens ein Elektrofilter angeordnet sein. Im hier gezeigten Beispiel ist im Frischluftkanalabschnitt 20a ein erster Elektrofilter 34a angeordnet.

Ferner ist im Innenraumabluftkanal 22 ein zweiter Elektrofilter 34b angeordnet. Es wird darauf hingewiesen, dass die Anordnung von einem jeweiligen Elektrofilter 34a, 34b im Frischluft- bzw. Innenraumabluftkanal 20a, 22 nicht zwingend ist. die hier vorgestellte Klimatisierungseinrichtung kann auch nur einen einzigen Elektrofilter aufweisen, der beispielsweise im Frischluftkanalabschnitt 20a angeordnet.

Das Klimatisierungssystem 10 umfasst eine Steuereinrichtung 36, die mit dem wenigstens einen Elektrofilter 34a, 34b verbunden ist, was in der Fig. 1 durch gestrichelte Linien illustriert ist. Die Steuereinrichtung 36 ist insbesondere dazu eingerichtet, den Betrieb des wenigstens einen Elektrofilters bzw. von beiden im Beispiel gezeigten Elektrofiltern 34a, 34b in Abhängigkeit von wenigstens einem erfassten Klimatisierungsparameter oder/und von wenigstens einem Fahrzeugzustandsparameter zu steuern.

Fig. 2 zeigt in einer vereinfachten Darstellung ein Kraftfahrzeug 100, das mit einem oben beschriebenen Klimatisierungssystem 10 ausgestattet ist. Das Kraftfahrzeug 100 weist einen im vorderen Bereich eine Abdeckung bzw. Motorhaube 102 auf, die durch eine gestrichelte Linie angedeutet ist. Ein Fahrzeugzustandsparameter, der von der Steuereinrichtung 36 des Klimatisierungssystems 10 berücksichtigt werden kann, kann der geöffnete bzw. geschlossene Zustand der Motorhaube 102 des Kraftfahrzeugs 100.

Dabei kann die Steuereinrichtung 36 dazu eingerichtet ist, den Elektrofilter 34a, 34b im geöffneten Zustand der Motorhaube 102 in einem limitierten Betrieb zu betreiben oder auszuschalten. Ergänzend kann die Steuereinrichtung 36 dazu eingerichtet ist, den Betrieb des Elektrofilters 34a, 34b ausgehend von einem Vollbetrieb kontinuierlich über eine bestimmte Zeitdauer zu reduzieren und in dem limitierten Betrieb einzustellen oder auszuschalten.

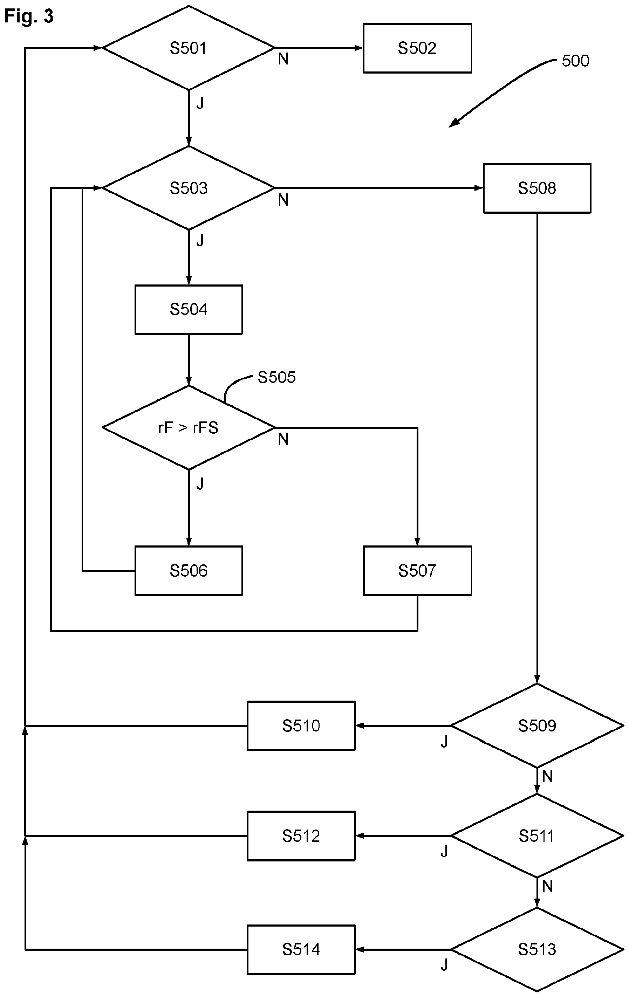

Fig. 3 zeigt ein schematisches und vereinfachtes Ablaufdiagramm eines Verfahrens 500 zum Betreiben eines oben beschriebenen Klimatisierungssystems 10 in einem Kraftfahrzeug 100.

Bei dem Verfahren 500 zum Betreiben des Klimatisierungssystems 10 wird in einem Schritt S501 festgestellt bzw. eine Anforderung gestellt, dass der Elektrofilter bzw. die Elektrofilter 34a, 34b des Klimatisierungssystems 10 betrieben werden soll oder nicht betrieben werden soll. Gemäß Schritt S502 wird der Elektrofilter 34a, 34b ausgeschaltet. Es wird darauf hingewiesen, dass nachfolgend der Einfachheit halber lediglich von "dem Elektrofilter" gesprochen wird, auch wenn das Klimatisierungssystem 10 mehrere Elektrofilter aufweisen kann.

Falls der Elektrofilter 34a, 34b aktiviert werden soll, wird in einem Schritt S503 überprüft, ob die Abdeckung bzw. Motorhaube 102 des Kraftfahrzeugs 100 geöffnet ist. Wenn die Motorhaube 102 geöffnet ist, wird in Schritt S504 ein aktueller Betriebsstatus, wie beispielsweise die elektrische Leistungsaufnahme oder die elektrische Betriebsspannung, des Elektrofilters 34a, 34b erfasst. Der Betriebsstatus bzw. die Betriebsspannung kann beispielsweise in einem Bereich von 20% bis 100% liegen. Mit anderen Worten ist der Elektrofilter 34a, 34b in einem Vollbetrieb (100%) oder einem Teillastbetrieb (<100%).

In einem Schritt S505 wird überprüft, ob eine relative Luftfeuchtigkeit rF einen Feuchtigkeitsschwellwert rFS überschreitet. Falls der Schwellwert rFS überschritten ist, wird gemäß Schritt S506 der Elektrofilter 34a, 34b (bei geöffneter Motorhaube 102) ausgeschaltet bzw. inaktiviert. Falls der Schwellwert rFS nicht erreicht ist, wird der Betriebsstatus, insbesondere die Betriebsspannung des Elektrofilters 34a, 34b auf beispielsweise 20% eingestellt.

Das Reduzieren auf einen Teillastbetrieb des Elektrofilters 34a, 34b gemäß Schritt S507 kann ausgehend von einem Vollbetrieb kontinuierlich über eine bestimmte Zeitdauer erfolgen. Beispielsweise kann eine anfängliche sehr hohe Spannung, die als 100% festgelegt wird, über eine bestimmte Zeitdauer reduziert werden, beispielsweise auf einen limitierten bzw. ausgeschalteten Wert von 0% bis 20%. Man kann in diesem Zusammenhang auch davon sprechen, dass der Elektrofilter mit einer Art Rampe bzw. Abklingkurve heruntergefahren wird.

Vereinfacht kann auch gesagt werden, dass der Elektrofilter 34a, 34b bei einer hohen relativen Luftfeuchtigkeit bei geöffneter Motorhaube 102 immer ausgeschaltet werden soll, wobei der Elektrofilter 34a, 34b bei einer geringen relativen Luftfeuchtigkeit in einem Teillastbetrieb weiter aktiviert ist bzw. bleibt.

Bei geöffneter Abdeckung bzw. Motorhaube 102 erfolgt nach Durchführung der Schritte S506 bzw. S507 eine erneute Abfrage gemäß Schritt S503, ob die Motorhaube 102 weiterhin geöffnet ist oder nicht.

Falls die Abdeckung bzw. Motorhaube 102 des Kraftfahrzeugs 100 geschlossen ist, was in Schritt S503 überprüft wird, wird der Elektrofilter 34a, 34b in Schritt S508 (wieder) aktiviert bzw. eingeschaltet.

In einem Schritt S509 wird überprüft, ob das Klimatisierungssystem 10 in einem reinen Frischluftbetrieb betrieben wird bzw. betrieben werden soll. Ist dies der Fall, wird gemäß Schritt S510 der Elektrofilter 34a im Frischluftkanalabschnitt 20a aktiviert und der Elektrofilter 34b im Innenraumabluftkanalabschnitt 22 wird deaktiviert. Ist kein reiner Frischluftbetrieb vorhanden bzw. angefordert, wird in Schritt S511 überprüft, ob das Klimatisierungssystem 10 in einem reinen Umluftbetrieb betrieben wird bzw. betrieben werden soll. Ist dies der Fall, wird gemäß Schritt S512 der Elektrofilter 34a im Frischluftkanalabschnitt 20a deaktiviert und der Elektrofilter 34b im Innenraumabluftkanalabschnitt 22 wird aktiviert.

Ist kein reiner Umluftbetrieb vorhanden bzw. angefordert, wird in Schritt S513 ein Mischbetrieb angenommen. Dabei können gemäß Schritt S514 der Elektrofilter 34a im Frischluftkanalabschnitt 20a und der Elektrofilter 34b im Innenraumabluftkanalabschnitt 22 aktiviert werden. Insbesondere kann gemäß Schritt S514 die Steuereinrichtung 36 des Klimatisierungssystems 10 dazu eingerichtet sein, im Mischbetrieb die beiden Elektrofilter 34a, 34b gleichzeitig oder intermittierend nacheinander zu aktivieren.

Bei dem vorgestellten Verfahren 500 kann die Steuereinrichtung 36 auch dazu eingerichtet sein, den bzw. die Elektrofilter 34a, 34b in Abhängigkeit von einem Temperaturwert, insbesondere Innenraumtemperatur oder/und Außentemperatur, oder/und von einem Luftfeuchtigkeitswert einzustellen.

Von den Schritten S510, S512 und S514 kann im Rahmen des Verfahrens 500 wieder bei Schritt S501 begonnen werden, in dem festgestellt wird, ob weiterhin eine Aktivierung des bzw. der Elektrofilter(s) 34a, 34b erforderlich ist bzw. beibehalten werden soll.

## Patentansprüche

1. Klimatisierungssystem (10) für ein Kraftfahrzeug (100) mit einer Klimatisierungseinheit (14), die dazu eingerichtet ist, Innenraumzuluft zu konditionieren;
wenigstens einem der Klimatisierungseinheit (14) zugeordneten Luftfilter (32);
einer Gebläseeinrichtung (18), die dazu eingerichtet ist, einen Luftstrom (LS) zu erzeugen, der zu der Klimatisierungseinheit (14) geleitet wird;
wenigstens einem mit der Gebläseeinrichtung (18) verbundenen Luftzufuhrkanal (20, 20a, 22);
wenigstens einem in dem Luftzufuhrkanal (20, 20a, 22) stromaufwärts von der Gebläseeinrichtung (18) angeordneten Elektrofilter (34a, 34b); einer Steuereinrichtung (36), die mit dem Elektrofilter (34a, 34b) verbunden ist;
wobei die Steuereinrichtung (36) dazu eingerichtet ist, den Betrieb des Elektrofilters (34a, 34b) in Abhängigkeit von wenigstens einem erfassten Klimatisierungsparameter oder/und von wenigstens einem Fahrzeugzustandsparameter zu steuern,
**dadurch gekennzeichnet, dass** der Fahrzeugzustandsparameter ein geöffneter und geschlossener Zustand einer Motorhaube (102) des Kraftfahrzeugs (100) ist.

2. Klimatisierungssystem (10) nach Anspruch 1, **dadurch gekennzeichnet, dass** es als Luftzufuhrkanäle (20) einen Frischluftkanal (20a) und einen Umluftkanal (22) aufweist.

3. Klimatisierungssystem (10) nach Anspruch 2, **dadurch gekennzeichnet, dass** in dem Frischluftkanal (20a) und in dem Umluftkanal (22) ein jeweiliger Elektrofilter (34a, 34b) angeordnet ist.

4. Klimatisierungssystem (10) nach Anspruch 3, **dadurch gekennzeichnet, dass** die Steuereinrichtung (36) dazu eingerichtet ist, einen betreffenden Elektrofilter (34a, 34b) in Abhängigkeit von einem eingestellten Klimatisierungsbetrieb, insbesondere Frischluftbetrieb oder Umluftbetrieb oder Mischbetrieb, zu aktivieren.

5. Klimatisierungssystem (10) nach Anspruch 4, **dadurch gekennzeichnet, dass** die Steuereinrichtung (36) dazu eingerichtet ist, im Mischbetrieb die beiden Elektrofilter (34a, 34b) gleichzeitig oder intermittierend nacheinander zu aktivieren.

6. Klimatisierungssystem (10) nach einem der vorhergehenden Ansprüche, **dadurch gekennzeichnet, dass** die Steuereinrichtung (36) dazu eingerichtet ist, den Elektrofilter (34a, 34b) in Abhängigkeit von einem Temperaturwert, insbesondere Innenraumtemperatur oder/und Außentemperatur, oder/und von einem Luftfeuchtigkeitswert einzustellen.

7. Klimatisierungssystem (10) nach einem der vorhergehenden Ansprüche, **dadurch gekennzeichnet, dass** die Steuereinrichtung (36) dazu eingerichtet ist, den Elektrofilter (34a, 34b) im geöffneten Zustand der Motorhaube (102) in einem limitierten Betrieb zu betreiben oder auszuschalten.

8. Klimatisierungssystem (10) nach Anspruch 7, **dadurch gekennzeichnet, dass** die Steuereinrichtung (36) dazu eingerichtet ist, den Betrieb des Elektrofilters (34a, 34b) ausgehend von einem Vollbetrieb kontinuierlich über eine bestimmte Zeitdauer zu reduzieren und in dem limitierten Betrieb einzustellen oder auszuschalten.

9. Klimatisierungssystem (10) nach Anspruch 7 oder 8, **dadurch gekennzeichnet, dass** die Steuereinrichtung (36) dazu eingerichtet ist, den limitierten Betrieb oder das Ausschalten des Elektrofilters (34a, 34b) in Abhängigkeit von einem Luftfeuchtigkeitswert (rF) einzustellen.

10. Kraftfahrzeug (100) mit einem Klimatisierungssystem (10) gemäß einem der vorhergehenden Ansprüche.

11. Verfahren (500) zum Betreiben eines Klimatisierungssystems (10) gemäß einem der Ansprüche 1 bis 9, umfassend die Schritte:
Feststellen (S503) des Zustands einer Motorhaube (102) des Kraftfahrzeugs (100);
Aktivieren (S508) des Betriebs des Elektrofilters (34a, 34b), wenn die Motorhaube (102) geschlossen ist;
Limitieren (S507) oder Deaktivieren (S506) des Betriebs des Elektrofilters (34a, 34b), wenn die Motorhaube (102) geöffnet ist, wobei vor dem Limitieren oder Deaktivieren ein aktueller Betriebsstatus des Elektrofilters (34a, 34b) erfasst wird (S504).

12. Verfahren (500) nach Anspruch 11, wobei ein Luftfeuchtigkeitswert (rF) erfasst wird und wobei das Limitieren oder Deaktivieren des Elektrofilters in Abhängigkeit von dem Luftfeuchtigkeitswert (rF) erfolgt (S505).

13. Verfahren (500) nach Anspruch 12, wobei der Elektrofilter (34a, 34b) deaktiviert wird, wenn der Luftfeuchtigkeitswert (rF) einen Feuchtigkeitsschwellwert (rFS) überschreitet (S505, S506).

## Claims

1. Air-conditioning system (10) for a motor vehicle (100), with an air-conditioning unit (14) which is configured to condition passenger compartment supply air;
at least one air filter (32) associated with the air-conditioning unit (14);
a blower apparatus (18) which is configured to generate an airflow (LS) which is directed to the air-conditioning unit (14);
at least one air supply channel (20, 20a, 22) connected to the blower apparatus (18);
at least one electrostatic filter (34a, 34b) arranged in the air supply channel (20, 20a, 22) upstream of the blower apparatus (18); a control apparatus (36) which is connected to the electrostatic filter (34a, 34b);
wherein the control apparatus (36) is configured to control the operation of the electrostatic filter (34a, 34b) according to at least one detected air-conditioning parameter and/or at least one vehicle status parameter,
**characterized in that** the vehicle status parameter is an opened and closed status of an engine cover (102) of the motor vehicle (100).

2. Air-conditioning system (10) according to claim 1, **characterized in that** it has a fresh air channel (20a) and a recirculation air channel (22) as air supply channels (20).

3. Air-conditioning system (10) according to claim 2, **characterized in that** a respective electrostatic filter (34a, 34b) is arranged in the fresh air channel (20a) and in the recirculation air channel (22).

4. Air-conditioning system (10) according to claim 3, **characterized in that** the control apparatus (36) is configured to activate a relevant electrostatic filter (34a, 34b) according to a set air-conditioning mode, in particular fresh air mode or recirculation mode or mixed mode.

5. Air-conditioning system (10) according to claim 4, **characterized in that** the control apparatus (36) is configured to activate the two electrostatic filters (34a, 34b) simultaneously or intermittently in succession in the mixed mode.

6. Air-conditioning system (10) according to any one of the preceding claims, **characterized in that** the control apparatus (36) is configured to adjust the electrostatic filter (34a, 34b) according to a temperature value, in particular passenger compartment temperature and/or outside temperature, and/or an air humidity value.

7. Air-conditioning system (10) according to any one of the preceding claims, **characterized in that** the control apparatus (36) is configured to operate the electrostatic filter (34a, 34b) in a limited operation or switch it off when the engine cover (102) is open.

8. Air-conditioning system (10) according to claim 7, **characterized in that** the control apparatus (36) is configured to continuously reduce the operation of the electrostatic filter (34a, 34b) over a certain period of time starting from a full operation and to set it in limited operation or switch it off.

9. Air-conditioning system (10) according to claim 7 or 8, **characterized in that** the control apparatus (36) is configured to set the limited operation or the switching off of the electrostatic filter (34a, 34b) according to an air humidity value (rF).

10. Motor vehicle (100) with an air-conditioning system (10) according to any one of the preceding claims.

11. Method (500) for operating an air-conditioning system (10) according to any one of claims 1 to 9, comprising the steps of:
determining (S503) the status of an engine cover (102) of the motor vehicle (100);
activating (S508) the operation of the electrostatic filter (34a, 34b) when the engine cover (102) is closed;
limiting (S507) or deactivating (S506) the operation of the electrostatic filter (34a, 34b) when the engine cover (102) is open, wherein a current operating status of the electrostatic filter (34a, 34b) is detected (S504) before the limiting or deactivating.

12. Method (500) according to claim 11, wherein an air humidity value (rF) is detected and wherein the limiting or deactivating of the electrostatic filter takes place (S505) according to the air humidity value (rF).

13. Method (500) according to claim 12, wherein the electrostatic filter (34a, 34b) is deactivated when the air humidity value (rF) exceeds (S505, S506) a humidity threshold value (rFS).

## Revendications

1. Système de climatisation (10) pour un véhicule automobile (100) avec une unité de climatisation (14) qui est configurée pour conditionner de l'air d'alimentation d'habitacle ;
au moins un filtre à air (32) associé à l'unité de climatisation (14) ;
un appareil de ventilateur (18) qui est configuré pour générer un flux d'air (LS) qui est dirigé vers l'unité de climatisation (14) ;
au moins un canal d'alimentation en air (20, 20a, 22) connecté à l'appareil de ventilateur (18) ;
au moins un filtre électrostatique (34a, 34b) disposé dans le canal d'alimentation en air (20, 20a, 22) en amont de l'appareil de ventilateur (18) ; un appareil de commande (36) qui est connecté au filtre électrostatique (34a, 34b) ;
dans lequel l'appareil de commande (36) est configuré pour commander le fonctionnement du filtre électrostatique (34a, 34b) en fonction d'au moins un paramètre de climatisation détecté et/ou d'au moins un paramètre d'état de véhicule,
**caractérisé en ce que** le paramètre d'état de véhicule est un état ouvert et fermé d'un capot-moteur (102) du véhicule automobile (100).

2. Système de climatisation (10) selon la revendication 1, **caractérisé en ce qu'**il présente un canal d'air frais (20a) et un canal d'air recyclé (22) en tant que canaux d'alimentation en air (20).

3. Système de climatisation (10) selon la revendication 2, **caractérisé en ce qu'**un filtre électrostatique respectif (34a, 34b) est disposé dans le canal d'air frais (20a) et dans le canal d'air recyclé (22).

4. Système de climatisation (10) selon la revendication 3, **caractérisé en ce que** l'appareil de commande (36) est configuré pour activer un filtre électrostatique (34a, 34b) concerné en fonction d'un fonctionnement de climatisation réglé, en particulier un fonctionnement par air frais ou fonctionnement par air recyclé ou fonctionnement mixte.

5. Système de climatisation (10) selon la revendication 4, **caractérisé en ce que** l'appareil de commande (36) est configuré pour activer les deux filtres électrostatiques (34a, 34b) simultanément ou par intermittence consécutivement en fonctionnement mixte.

6. Système de climatisation (10) selon l'une quelconque des revendications précédentes, **caractérisé en ce que** l'appareil de commande (36) est configuré pour régler le filtre électrostatique (34a, 34b) en fonction d'une valeur de température, en particulier de température d'habitacle et/ou de température extérieure, et/ou d'une valeur d'humidité de l'air.

7. Système de climatisation (10) selon l'une quelconque des revendications précédentes, **caractérisé en ce que** l'appareil de commande (36) est configuré pour, dans un fonctionnement limité à l'état ouvert du capot-moteur (102), faire fonctionner ou désactiver le filtre électrostatique (34a, 34b).

8. Système de climatisation (10) selon la revendication 7, **caractérisé en ce que** l'appareil de commande (36) est configuré pour réduire continuellement le fonctionnement du filtre électrostatique (34a, 34b) à partir d'un fonctionnement à plein régime pendant une durée déterminée et pour, dans le fonctionnement limité, le régler ou le désactiver.

9. Système de climatisation (10) selon la revendication 7 ou 8, **caractérisé en ce que** l'appareil de commande (36) est configuré pour régler le fonctionnement limité ou la désactivation du filtre électrostatique (34a, 34b) en fonction d'une valeur d'humidité de l'air (rF).

10. Véhicule automobile (100) avec un système de climatisation (10) selon l'une quelconque des revendications précédentes.

11. Procédé (500) de fonctionnement d'un système de climatisation (10) selon l'une quelconque des revendications 1 à 9, comprenant les étapes de :
détermination (S503) de l'état d'un capot-moteur (102) du véhicule automobile (100) ;
activation (S508) du fonctionnement du filtre électrostatique (34a, 34b) lorsque le capot-moteur-moteur (102) est fermé ;
limitation (S507) ou désactivation (S506) du fonctionnement du filtre électrostatique (34a, 34b) lorsque le capot-moteur (102) est ouvert, dans lequel un état de fonctionnement actuel du filtre électrostatique (34a, 34b) est détecté (S504) avant la limitation ou la désactivation.

12. Procédé (500) selon la revendication 11, dans lequel une valeur d'humidité de l'air (rF) est détectée et dans lequel la limitation ou la désactivation du filtre électrostatique est effectuée (S505) en fonction de la valeur d'humidité de l'air (rF).

13. Procédé (500) selon la revendication 12, dans lequel le filtre électrostatique (34a, 34b) est désactivé lorsque la valeur d'humidité de l'air (rF) dépasse (S505, S506) une valeur seuil d'humidité (rFS).
